# EUROPEAN PATENT SPECIFICATION

(11) **EP 4 202 105 B1**
(45) Date of publication and mention of the grant of the patent: **23.10.2024**
(21) Application number: 20951054.4
(22) Date of filing: 28.09.2020
(51) Int. Cl.: D06F 37/04, D06F 23/02, D06F 39/08

(54) **DRAINAGE VALVE ASSEMBLY AND LAUNDRY TREATMENT DEVICE**
ENTWÄSSERUNGSVENTILANORDNUNG UND WÄSCHEBEHANDLUNGSVORRICHTUNG
ENSEMBLE VANNE DE DRAINAGE ET DISPOSITIF DE TRAITEMENT DE LINGE

(30) Priority: 27.08.2020 CN 202010881211
(43) Date of publication of application: 28.06.2023
(73) Proprietor: Wuxi Little Swan Electric Co., Ltd., Wuxi, Jiangsu 214028 (CN)
(72) Inventor: YANG, Weiguo, Wuxi, Jiangsu 214028 (CN); WANG, Jia, Wuxi, Jiangsu 214028 (CN); ZHOU, Wei, Wuxi, Jiangsu 214028 (CN); TONG, Shuai, Wuxi, Jiangsu 214028 (CN); KANG, Fei, Wuxi, Jiangsu 214028 (CN); XUE, Erpeng, Wuxi, Jiangsu 214028 (CN)
(74) Representative: Whitlock, Holly Elizabeth Ann
(86) International application number: PCT/CN2020/118589
(87) International publication number: WO 2022/041386

(56) References cited:
- WO-A1-2018/077280
- CN-A- 1 769 580
- CN-A- 103 498 501
- CN-A- 109 423 853
- CN-A- 111 074 488
- CN-A- 111 118 806
- CN-A- 111 155 264
- CN-U- 209 555 578
- CN-U- 209 742 003
- JP-A- 2016 073 595
- KR-A- 20000 003 765
- US-A1- 2018 237 977
- US-A1- 2020 263 343

## Description

### TECHNICAL FIELD

The application relates to the technical field of laundry washing and care, and in particular to a drainage valve assembly and a laundry treatment device.

### BACKGROUND

In an existing washing machine, an inner tub and an outer tub are communicated with each other, the inner tub is used to hold clothes, the outer tub is used to hold water, a large number of water passing holes are arranged in the inner tub, so that the inner tub and the outer tub are communicated through the water passing holes, water in the outer tub enters the inner tub, injection and drainage of water is implemented through the outer tub. In this type of washing machine, dirt is easily accumulated between the inner tub and the outer tub, which breeds bacteria and is not easy to be cleaned. To this end, a washing machine with a single tub used for washing is present in the related art is different from existing washing modes in that the inner tub is a non-porous inner tub and is isolated from the outer tub, and the single tub is not only used to hold clothes and beat or stir the clothes, but also used to hold water. However, drainage and dewatering of the washing machine with a single tub used for washing has become a difficult technology urgently to be overcome.

In the related art, a side wall of the inner tub is provided with a dewatering port and a dewatering valve, the dewatering valve is connected to the inner tub through a spring, and when dewatering is performed in the inner tub, the dewatering valve opens the dewatering port under an action of a centrifugal rotation force of the inner tub, and water in the inner tub may be discharged out of the inner tub through the dewatering port; and when washing is performed in the inner tub, the dewatering valve closes the dewatering port under an action of the spring.

In the above solution, the dewatering valve may be opened only when the inner tub rotates at a high speed. When a washing process in the inner tub is finished, a large amount of water is held in the inner tub, and a motor needs to drive the inner tub and water in the inner tub to rotate at a high speed to implement drainage. On one hand, drainage of water may not be implemented when the inner tub rotates at a low speed, and on the other hand, the motor may operate in an overload manner. CN 111 155 264 A relates to the technical field of electric appliance manufacturing, in particular to a washing machine. US 2020/263343 A1 relates to the technical field of a laundry equipment, specifically, relates to water-free washing machine between inner and outer barrels. US 2018/237977 A1 relates to the field of washing machines, and in particular relates to a discharge control mechanism for an inner tub of a washing machine and the washing machine. WO 2018/077280 A1 relates to a washing machine that can inhibit the generation of dirt or mold in and around a dehydrating tub. CN 111 118 806 A relates to washing machine equipment in household appliances, in particular to a top-opening type drum washing machine. CN 109 423 853 A relates to the washing machine technology fields, and in particular to ones where the rotatable inner cylinder can be filled with water CN 1 769 580 A relates to the bucket drain valve structure in a kind of water-saving impeller-type or the stirring type fully automatic washing machine. CN 103 498 501 A relates to the flush of the toilet. It more specifically relates to the kind of draining valve starting drive, a kind of a kind of water-closet bowl flushing apparatus and method of applying the draining valve starting drive. JP 2016 073595 A relates to providing a drain valve drive unit with clutch operation mechanism, that implements an opening and closing operation of the drain valve in conjunction with a clutch operation that has a simplified composition and reduced load on a motor.

### SUMMARY

In view of this, it is desirable for embodiments of the application to provide a drainage valve assembly which facilitates drainage, and a laundry treatment device. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention.

In order to achieve the above purpose, an embodiment of the invention provides a drainage valve assembly, including a valve core, a transmission rod mechanism, and an elastic reset member

The valve core is configured to seal a drainage hole, and has a drainage position and a sealing position.

The transmission rod mechanism has a rotation center line, and includes a transmission rod and a first shifting rod connected to each other, a first end of the transmission rod directly or indirectly drives the valve core to move so that the valve core is switched between the sealing position and the drainage position, and a second end of the transmission rod is connected to the first shifting rod.

The elastic reset member is configured to drive the transmission rod to be reset to an initial position thereof.

According to the invention, the drainage valve assembly comprises a valve seat of which a side is opened, at least a part of the valve core is arranged in the valve seat, and the first shifting rod is positioned outside the valve seat.

According to the invention, the elastic reset member is a first torsion spring sleeved on the transmission rod, two rotation arms of the first torsion spring abutted against the valve seat in a separable way, and in a process of the transmission rod driving the valve core to rotate or translate, the transmission rod mechanism is operative to alternatively toggle one of the rotation arms to move therewith.

In some implementations, at the initial position, the transmission rod may be operative to rotate forward or backward, a pre-tightening force is formed between each of the two rotation arms and the valve seat, and the first torsion spring is operative to be kept at the initial position under an action of pre-tightening forces corresponding to the two rotation arms.

In some implementations, any one of the rotation arms may move toward a direction of tightening the first torsion spring by toggling of the transmission rod mechanism.

In some implementations, the transmission rod mechanism may comprise a toggling rod moving synchronously with the transmission rod and positioned between the two rotation arms to alternatively toggle any one of the rotation arms.

In some implementations, a bottom surface of the valve seat may be provided with a convex rib extending along a length direction of the transmission rod, and when the transmission rod is positioned at the initial position: in a plane projection perpendicular to the rotation center line, the two rotation arms are intersected and then abutted against opposite sides of the convex rib, and the toggling rod is positioned between an intersection point of the two rotation arms and the convex rib.

In some implementations, the transmission rod mechanism may comprise a sleeving member including a sleeve portion and the toggling rod, the sleeve portion is sleeved on the transmission rod and synchronously rotates along with the transmission rod, and the toggling rod is connected to the sleeve portion.

In some implementations, a circumferential surface of the sleeve portion may be provided with a boss, the toggling rod extends along an axial direction of the sleeve portion, and an end of the toggling rod is connected to the boss.

In some implementations, one of the valve seat or the valve core may be provided with a guide groove, the other of the valve seat or the valve core may be provided with a guide rib, and the guide rib is sliding-fitted with the guide groove.

In some implementations, the drainage valve assembly may comprise an elastic positioning member, the valve core is operative to be kept at the sealing position or the drainage position under an action of the elastic positioning member, and the elastic reset member is operative to drive the transmission rod to idle to be reset to the initial position.

In some implementations, the valve core may have an intermediate critical position between the sealing position and the drainage position, and when the transmission rod drives the valve core to cross the intermediate critical position, the elastic positioning member is operative to drive the valve core to continue to move to the sealing position or the drainage position, and the elastic reset member is operative to drive the transmission rod to idle to be reset.

In some implementations, the transmission rod mechanism may further comprise a reversal mechanism connected between the valve core and the first end of the transmission rod, and the transmission rod mechanism drives the valve core to translate through the reversal mechanism.

An embodiment of the invention further provides a laundry treatment device, including an inner tub, a driving device, and the drainage valve assembly of any one of the above contents. The inner tub is configured to hold water and be provided with a drainage hole. The drainage valve assembly is connected to the inner tub, and the driving device toggles the first shifting rod to drive the transmission rod mechanism to rotate around the rotation center line.

In some implementations, the laundry treatment device may comprise a lifting rib in which the valve core and the elastic reset member are arranged, the first end of the transmission rod is positioned in the lifting rib, the second end of the transmission rod extends outside an axial end of the inner tub, and the first shifting rod is positioned outside the axial end of the inner tub.

In some implementations, the laundry treatment device may comprise an outer tub in which the inner tub is rotatably arranged, the driving device is arranged on the outer tub, the first shifting rod is positioned between the inner tub and the outer tub, the driving device includes a second shifting rod and a power unit driving the second shifting rod to selectively extend towards the shifting rod or retract, and in an extending state of the second shifting rod, the second shifting rod is operative to selectively toggle the first shifting rod to rotate forward or backward around the rotation center line.

According to the laundry treatment device provided by the embodiments of the invention, application, regardless of a rotation speed of the inner tub, switching of the valve core between the sealing position and the drainage position may be implemented as long as the transmission rod mechanism may rotate, so that the laundry treatment device has a simple structure, facilitates drainage of the inner tub and has high reliability, and service life of the drainage valve assembly may be effectively prolonged.

### BRIEF DESCRIPTION OF THE DRAWINGS

FIG. 1 is a schematic structural diagram of a drainage valve assembly according to a first embodiment of the invention.
FIG. 2 is a schematic exploded view of the structure shown in FIG. 1.
FIG. 3 is a schematic view from another perspective of FIG. 2.
FIG. 4 is a schematic view from another perspective of the structure shown in FIG. 1 after a flexible sealing member is omitted.
FIG. 5 is a cross-sectional view of the drainage valve assembly shown in FIG. 1 along an A-A direction of FIG. 4, here, a valve core is positioned at a sealing position.
FIG. 6 is a schematic view of the structure shown in FIG. 5 in another state, here, the valve core is positioned at a drainage position.
FIG. 7 is a cross-sectional view taken along a C-C direction of FIG. 4.
FIG. 8 is a schematic structural diagram of a reversal mechanism shown in FIG. 2.
FIG. 9 is a schematic view of cooperation of a flat shaft portion and a reversal mechanism shown in FIG. 2, here, the flat shaft portion is positioned at an initial position, and at the position, the reversal mechanism enables a valve core to be positioned at a sealing position.
FIG. 10 is a schematic view of the structure shown in FIG. 9 in another state, here, the flat shaft portion drives the reversal mechanism to move by a certain angle in an arrow direction.
FIG. 11 is a schematic view of the structure shown in FIG. 10 in another state, here, the reversal mechanism continues to rotate by a certain angle in a counterclockwise direction of FIG. 10, and at the position, the reversal mechanism enables the valve core to be positioned at a drainage position, and the flat shaft portion rotates by a certain angle in a clockwise direction of FIG. 10 to be reset to the initial position.
FIG. 12 is a schematic exploded view of a drainage valve assembly according to a second embodiment of the invention.
FIG. 13 is a schematic view from another perspective of the structure shown in FIG. 12.
FIG. 14 is a schematic view from another perspective of the structure shown in FIG. 12 after it is assembled, here, a flexible sealing member, a valve plate and a valve cover are omitted.
FIG. 15 is a schematic structural diagram of a reversal mechanism shown in FIG. 13.
FIG. 16 is a cross-sectional view taken along a B-B direction of FIG. 14.
FIG. 17 is a schematic structural diagram of part of a laundry treatment device according to an embodiment of the invention.
FIG. 18 is a cross-sectional view of the structure shown in FIG. 17, here, a valve core is positioned at a sealing position and a second shifting rod is retracted.
FIG. 19 is a schematic view of the structure shown in FIG. 18 after the second shifting rod extends out.
0046] FIG. 20 is a schematic view of the structure shown in FIG. 18 in another state, here, the valve core is positioned at a drainage position and the second shifting rod is retracted.
FIG. 21 is a schematic view of movement of an inner tub, a first shifting rod and a second shifting rod according to an embodiment of the application, here, the first shifting rod begins to contact the first shifting rod.
FIG. 22 is a schematic view of the inner tub of FIG. 21 rotated clockwise by a certain angle.

### DETAILED DESCRIPTION

It should be noted that embodiments of the invention and technical features in the embodiments may be combined with each other without conflict, and detailed descriptions in specific implementations should be understood as explanation and illustration of the purpose of the invention, and should not be regarded as an improper limitation to the application.

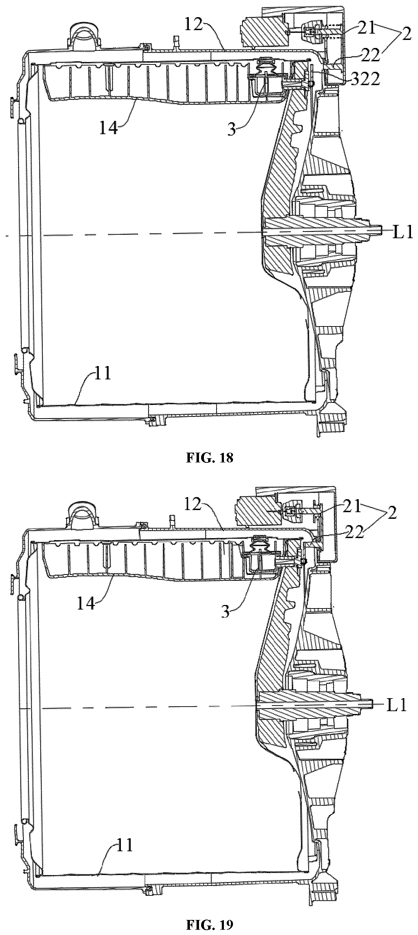

In descriptions of the embodiments of the application, orientations or positional relationships such as "upper", "lower", "front", "rear" are based on an orientation or positional relationship shown in FIG. 18. In FIG. 18, an upper part is "upper", a lower part is "lower", a left part is "front", and a right part is "rear".

It should be understood that these orientation terms are merely intended to facilitate descriptions of the application and simplify the descriptions, rather than indicating or implying that a referred device or element must have a specific orientation, constructed and operated in a specific orientation, and thus cannot be understood as limitation to the application.

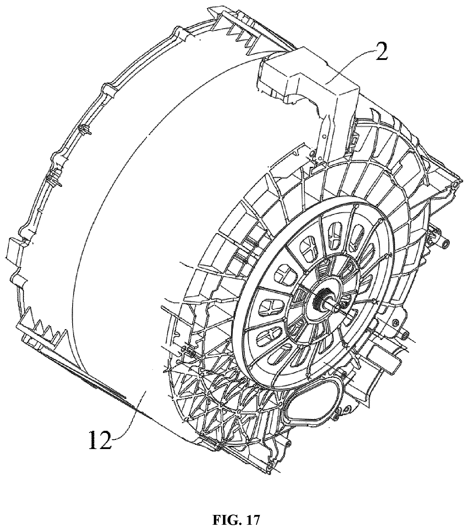

An embodiment of the invention provides a laundry treatment device, with reference to FIG. 17 to FIG. 20, the laundry treatment device includes an inner tub 11, a driving device 2, and a drainage valve assembly 3.

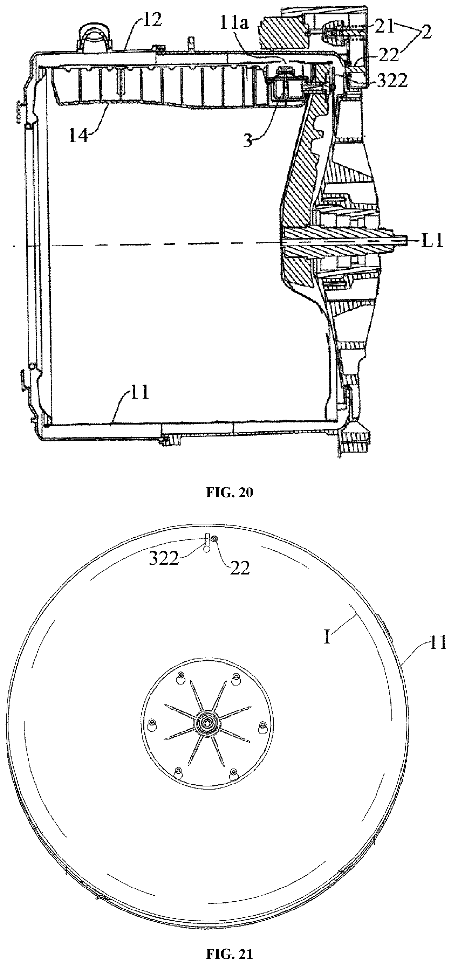

The inner tub 11 may hold water. That is, washing water is held in the inner tub 11 in a process of the laundry treatment device washing laundries, and the inner tub 11 may also be referred to as a non-porous inner tub 11, which may avoid the problem of accumulating dirt easily due to water held in the outer tub 12 of the related art; and a drainage hole 11a is formed on the inner tub 11 (see FIG. 20).

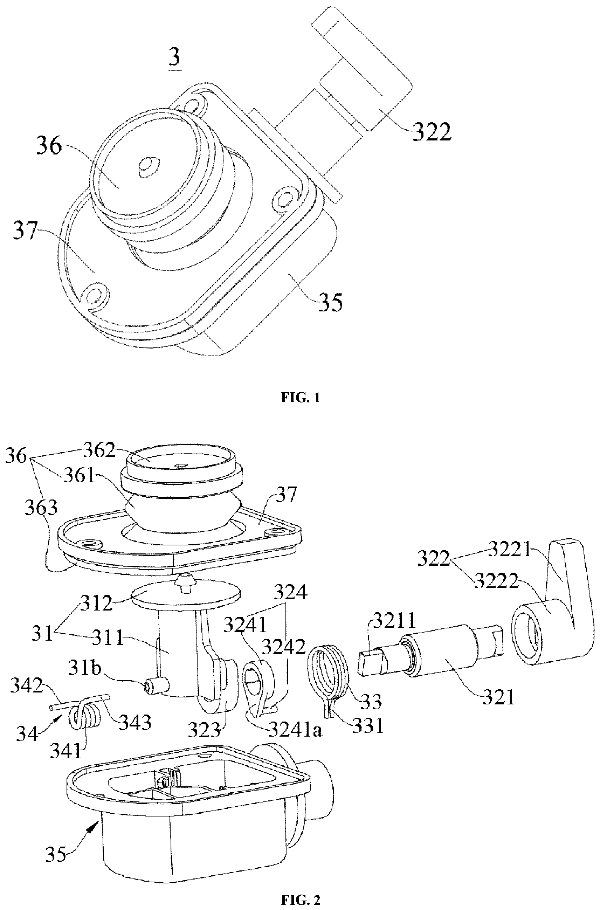

In an embodiment, with reference to FIG. 1, FIG. 3 and FIG. 12, the drainage valve assembly 3 includes a valve core 31, a transmission rod mechanism 32, and an elastic reset member.

The valve core 31 is configured to seal the drainage hole 11a, and specifically, the valve core 31 has a drainage position and a sealing position. With reference to FIG. 20, when the valve core 31 is positioned at the drainage position, the drainage hole 11a is opened, and water in the inner tub 11 may be discharged through the drainage hole 11a. With reference to FIG. 18, when the valve core 31 is positioned at the sealing position, the valve core 31 seals the drainage hole 11a, water in the inner tub 11 is not discharged, and the inner tub 11 functions as a water tub.

The drainage hole 11a may be arranged at a suitable position of the inner tub 11, as long as water in the inner tub 11 may be discharged through the drainage hole 11a. The number and specific shape of the drainage hole 11a are not limited.

In the embodiment of the invention, with reference to FIG. 20, the drainage hole 11a is formed in a circumferential direction of rotation of the inner tub 11, so that the inner tub 11 spins water out from the drainage hole 11a by a centrifugal force during dewatering.

It should be noted that a rotation axis L1 of the inner tub 11 may extend in a horizontal direction, or may extend in a vertical direction, or may extend in an oblique direction between the horizontal direction and the vertical direction, which is not limited here.

In an embodiment of the invention with reference to FIG. 18 to FIG. 20, the rotation axis L of the inner tub 11 is approximately in the horizontal direction, and during rotation of the inner tub 11, the drainage hole 11a may circularly pass through a lowest point of a rotation trajectory of the inner tub 11, so that water in the inner tub 11 may be emptied without a dead angle.

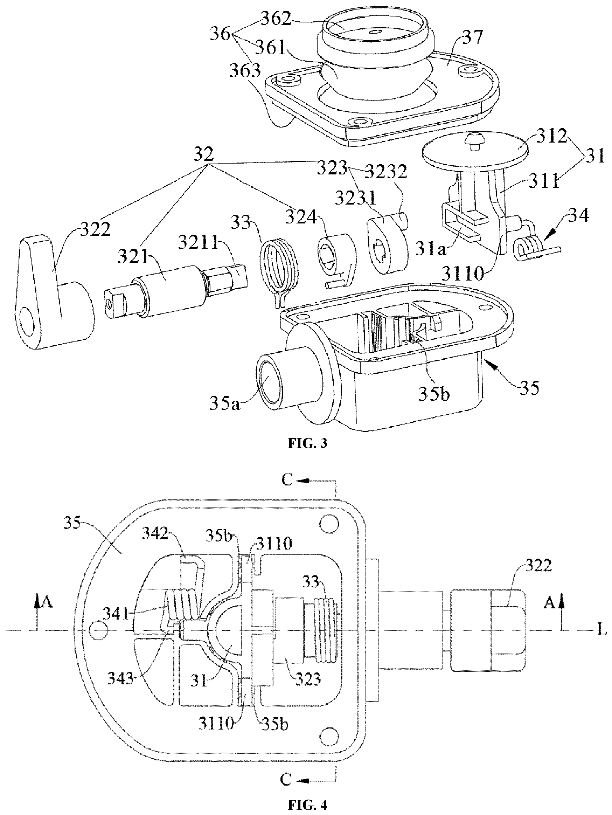

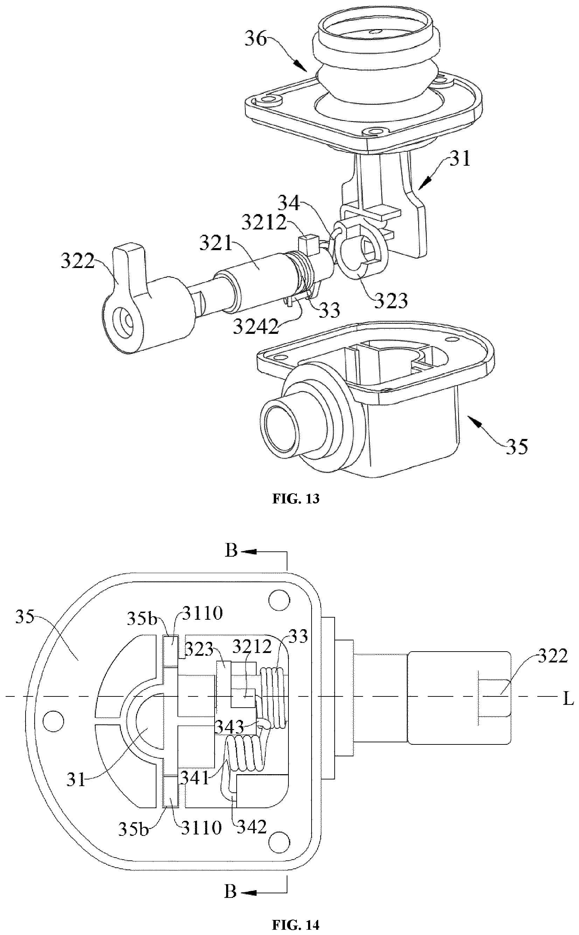

With reference to FIG. 4 and FIG. 14, the transmission rod mechanism 32 has a rotation center line L, that is, the transmission rod mechanism 32 revolves around the rotation axis L1 of the inner tub 11 while rotating around the rotation center line L.

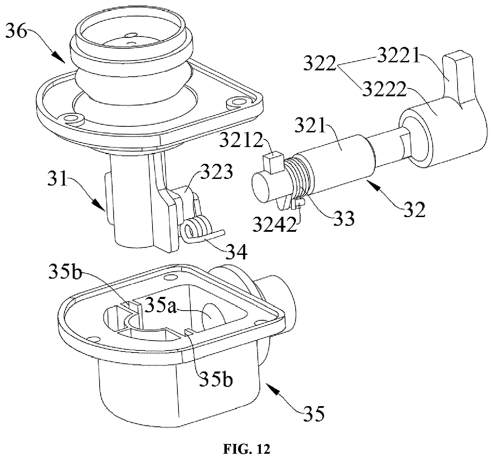

With reference to FIG. 3 and FIG. 12, the transmission rod mechanism 32 includes a transmission rod 321 and a first shifting rod 322 connected to each other, a first end of the transmission rod 321 directly or indirectly drives the valve core 31 to move so that the valve core 31 is switched between the sealing position and the drainage position, a second end of the transmission rod 321 is connected to the first shifting rod 322, and the first shifting rod 322 moves synchronously with the transmission rod 321. The elastic reset member is configured to drive the transmission rod 321 and the first shifting rod 322 to be reset to their respective initial positions.

It should be noted that the initial position refers to a relatively stable position where the first shifting rod 322 is positioned before it is toggled by a driving device 20.

During washing or in other cases where drainage is not required, with reference to FIG. 18 and FIG. 19, the valve core 31 is positioned at the sealing position, the drainage hole 11a is blocked by the valve core 31, and water in the inner tub 11 does not flow out of the inner tub 11. When drainage or dewatering is required, with reference to FIG. 20, the valve core 31 is switched from the sealing position to the drainage position, the drainage hole 11a is opened, and water in the inner tub 11 is discharged from the inner tub 11 through the drainage hole 11a.

According to the drainage valve assembly provided by the embodiments of the invention, regardless of a rotation speed of the inner tub 11, switching of the valve core 31 between the sealing position and the drainage position may be implemented as long as the transmission rod mechanism 32 may rotate, so that the drainage valve assembly has a simple structure, facilitates drainage of the inner tub 11 and has high reliability, and service life of the drainage valve assembly 3 may be effectively prolonged.

It should be noted that the laundry treatment device discharges water through the drainage hole 11a during washing or after washing is finished, and the laundry treatment device may also discharge water through the drainage hole 11a during dewatering.

It may be understood that the drainage valve assembly 3 may be directly or indirectly connected to the inner tub 11, for example, the drainage valve assembly may be connected to a lifting rib 14 on an inner side of the inner tub 11, and the lifting rib 14 provides a mounting position for the drainage valve assembly 3.

Exemplarily, in an embodiment, with reference to FIG. 2 and FIG. 12, the drainage valve assembly 3 includes a valve seat 35 of which a side facing toward the drainage hole 11a is opened, at least a part of the valve core 31 is arranged in the valve seat 35, and an end of the valve core 31 may extend out from the opened part of the valve seat 35. The first shifting rod 322 is positioned outside the valve seat 35. That is, the transmission rod 321 passes through a side wall of the valve seat 35, and exemplarily, with reference to FIG. 3 and FIG. 12 again, the side wall of the valve seat 35 is provided with an avoidance groove 35a, and the transmission rod 321 is arranged in the avoidance groove 35a and passes through the avoidance groove 35a.

The valve seat 35 provides mounting support for the valve core 31 and the transmission rod mechanism 32, and also protects the valve core 31 and the transmission rod mechanism 32, thereby avoiding interference with other structures of the laundry treatment device and improving reliability of the drainage valve assembly 3.

It should be noted that in some embodiments, when the valve core 31 is positioned at the drainage position, the valve core 31 is positioned in the valve seat 35 in its entirety, and when the valve core 31 is positioned at the sealing position, an end of the valve core 31 used to seal the drainage hole 11a extends outside the valve seat 35. In some other embodiments, no matter the valve core 31 is positioned at the drainage position or the sealing position, a part of the valve core 31 is positioned in the valve seat 35, and the end of the valve core 31 used to seal the drainage hole 11a is always positioned at a position of extending outside the valve seat 35.

The valve seat 35 protects the valve core 31, the transmission rod 321, the elastic reset member, or the like, and prevents the valve core 31, the transmission rod 321, the elastic reset member, or the like from being scratched by other components.

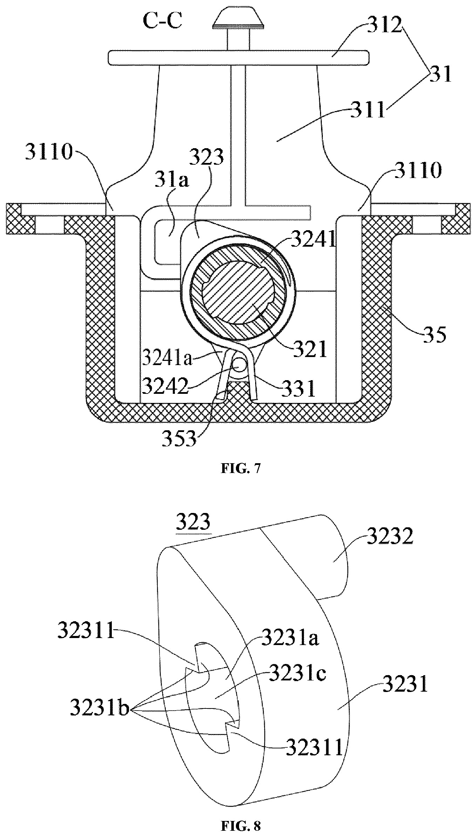

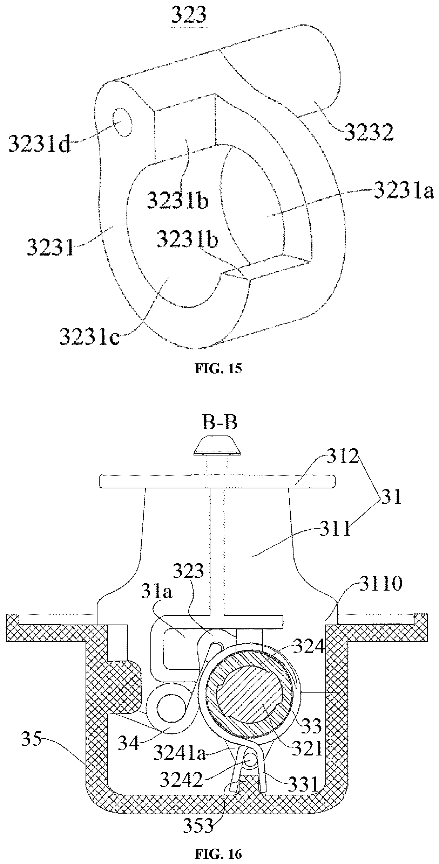

Specific structural forms of the elastic reset member are not limited, as long as it may drive the transmission rod 321 and the first shifting rod 322 to be reset. According to the present invention, with reference to FIG. 7 and FIG. 16, the elastic reset member is a first torsion spring 33 sleeved on the transmission rod 321, two rotation arms 331 of the first torsion spring 33 abutted against the valve seat 35 in a separable way, and during rotation of the transmission rod 321, the transmission rod mechanism 32 may alternatively toggle one of the rotation arms 331 to move along therewith.

Specifically, the first shifting rod 322 drives the transmission rod 321 to rotate synchronously, and the transmission rod 321 drives the valve core 31 to move, so that the valve core 31 is switched between the drainage position and the sealing position. In a process of the transmission rod 321 driving the valve core 31 to move, the transmission rod mechanism 32 synchronously toggles one of the rotation arms 331 to move so that the first torsion spring 33 stores potential energy. A reaction force of the valve seat 35 to the first torsion spring 33 is balanced by two rotation arms 331 of the first torsion spring 33, so that the transmission rod may be reliably kept at the initial position. Exemplarily, by taking a state shown in FIG. 7 as an example, when the transmission rod 321 rotates counterclockwise in FIG. 7, the transmission rod mechanism 32 toggles a right one of the rotation arms 331 to rotate therewith; and when the transmission rod 321 rotates clockwise in FIG. 7, the transmission rod mechanism 32 toggles a left one of the rotation arms 331 to rotate therewith. When the first shifting rod 322 loses its driving force, the first torsion spring 33 may drive the transmission rod 321 and the first shifting rod 322 to be reset.

Connection modes of the first shifting rod 322 and the transmission rod 321 are not limited, as long as the first shifting rod 322 and the transmission rod 321 may implement synchronous movement, for example, the first shifting rod 322 and the transmission rod 321 may be integrally formed, clamped, screwed, or the like with respect to each other, which is not limited here.

It may be understood that in order to facilitate connection between the first shifting rod 322 and the transmission rod 321, in some embodiments, with reference to FIG. 2 and FIG. 12, the first shifting rod 322 includes a rod body 3221 and a barrel body 3222 which are fixedly connected, the driving device 2 is in contact with the rod body 3221, the barrel body 3222 is connected to an end of the rod body and is sleeved on the second end of the transmission rod 321.

It should be noted that the initial position in the embodiment of the invention refers to a stable and balanced position where the transmission rod 321 and the first shifting rod 322 are positioned without external forces applied to the drainage valve assembly 3.

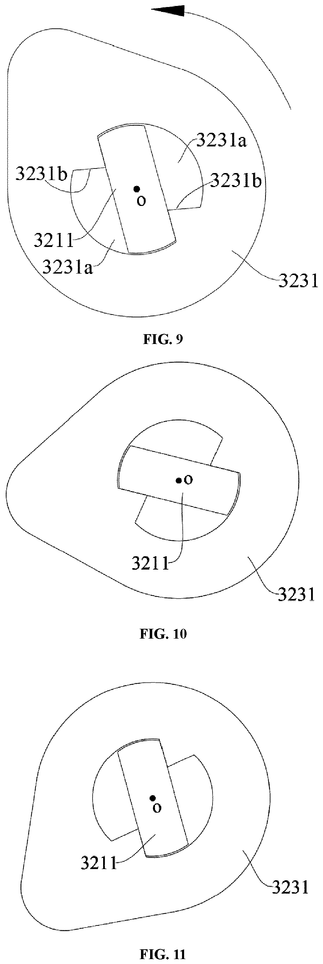

In an embodiment, at the initial position, the transmission rod 321 may rotate forward or backward, that is, when the transmission rod 321 is positioned at the initial position, the first shifting rod 322 may drive the transmission rod 321 to rotate forward or drive the transmission rod 321 to rotate backward. For example, with reference to FIG. 9 and FIG. 11, the transmission rod 321 is positioned at the initial position in FIG. 9 and FIG. 11, and in this state, the transmission rod 321 may rotate counterclockwise in FIG. 9 or FIG. 11, or may rotate clockwise in FIG. 9 or FIG. 11.

With reference to FIG. 7 and FIG. 16, a pre-tightening force is formed between each of the two rotation arms 331 and the valve seat 35, that is, at the initial position, the first torsion spring 33 has been subjected to torsional deformation, and the first torsion spring 33 may be kept at the initial position under an action of pre-tightening forces corresponding to the two rotation arms 331. Specifically, the valve seat 35 generates a first acting force on one of the rotation arms 331 and generates a second acting force on the other of the rotation arms 331, and the first torsion spring 33 keeps balanced under an action of the first acting force and the second acting force, to be maintained at the initial position. In the embodiment, there is a pre-tightening force at the initial position, therefore, even though the transmission rod 321 moves close to the initial position when the transmission rod 321 is reset, the first torsion spring 33 may have a large restoring force to reliably return the transmission rod 321 to the initial position, without causing the transmission rod 321 to swing near the initial position or unable to return to the initial position, so that reset reliability of the transmission rod 321 and the first shifting rod 322 may be improved.

In an embodiment, any one of the rotation arms 331 moves toward a direction of tightening the first torsion spring 33 by toggling of the transmission rod mechanism 32. In this way, the rotation arm 331 always moves toward the direction of tightening the first torsion spring 33, on one hand, the first torsion spring 33 is not easy to generate failure, and on the other hand, the first torsion spring 33 may have a large resilience force.

It should be noted that moving toward the direction of tightening the first torsion spring 33 means that a movement direction of the rotation arm 331 is consistent with a spiral direction of the first torsion spring 33, and a pitch of the first torsion spring 33 is reduced after the rotation arm 331 moves.

The transmission rod mechanism 32 may have any suitable structure to selectively toggle two rotation arms 331. Exemplarily, in an embodiment, with reference to FIG. 2, the transmission rod mechanism 32 includes a toggling rod 3242 moving synchronously with the transmission rod 321 and positioned between the two rotation arms 331 to alternatively toggle any one of the rotation arms 331.

Abutting modes of the two rotation arms 331 and the valve seat 35 are not limited. For example, in an embodiment, with reference to FIG. 7 and FIG. 16, a bottom surface of the valve seat 35 is provided with a convex rib 353 extending along a length direction of the transmission rod 321, and when the transmission rod 321 is positioned at the initial position: in a plane projection perpendicular to the rotation center line, the two rotation arms 331 are intersected and then abutted against opposite sides of the convex rib 353, and the toggling rod 3242 is positioned between an intersection point of the two rotation arms 331 and the convex rib 353. In this way, when the toggling rod 3242 toggles one of the rotation arms 331 in any direction, the rotation arm 331 may move toward the direction of tightening the first torsion spring 33, and the other of the rotation arms 331 may also reliably abutted against the other side of the convex rib 353.

It should be noted that connection modes of the transmission rod 321 and the toggling rod 3242 are not limited, as long as the transmission rod 321 and the toggling rod 3242 may implement synchronous movement. In some embodiments, the toggling rod 3242 and the transmission rod 321 may be fixedly connected, for example, integrally formed, screwed, clamped, or the like with respect to each other. In some other embodiments, the toggling rod 3242 may move axially relative to the transmission rod 321.

Exemplarily, with reference to FIG. 2 and FIG. 3, the transmission rod mechanism 32 includes a sleeving member 324 including a sleeve portion 3241 and the toggling rod 3242, the sleeve portion 3241 is sleeved on the transmission rod 321 and synchronously rotates along with the transmission rod 321, and the toggling rod 3242 is connected to the sleeve portion 3241. Transmission between the barrel portion 3241 and the transmission rod 321 may be implemented through a flat key, a spline, or the like, or torque transmission between the barrel portion 3241 and the transmission rod 321 may be implemented through a non-circular circumferential contour. In the embodiment, during assembly, after the transmission rod 321 passes through the side wall of the valve seat 35, the sleeve portion 3241 may be directly sleeved on the transmission rod 321, and fixation does not require fasteners such as screws or the like, so that disassembly and assembly are convenient.

In an embodiment, with reference to FIG. 2 again, a circumferential surface of the sleeve portion 3241 is provided with a boss 3241a, the toggling rod 3242 extends along an axial direction of the sleeve portion 3241, that is, the toggling rod 3242 is substantially parallel to the transmission rod 321, and an end of the toggling rod 3242 is connected to the boss 3241a.

In an embodiment, the first torsion spring 33 may drive the transmission rod 321 to idle to be reset. It should be noted that "idle" refers to that the transmission rod 321 does not form a driving force on the valve core 31 during idling. When the driving device 2 needs to toggle the transmission rod mechanism 32 next time, the driving device 2 will toggle the first shifting rod 322 at the same position, which may simplify driving and fitting structures of the transmission rod mechanism 32 and the driving device 2.

In a process of the transmission rod 321 idling to be reset, the valve core 31 does not move along with the transmission rod 321, that is, at this time, other structures apply an acting force to the valve core 31 to prevent the valve core 31 from rotating backward along with the transmission rod 321.

Exemplarily, in an embodiment, the drainage valve assembly 3 includes an elastic positioning member, and the valve core 31 further has an intermediate critical position between the sealing position and the drainage position, and when the transmission rod mechanism 32 drives the valve core 31 to cross the intermediate critical position, the elastic positioning member may drive the valve core 31 to continue to move to the sealing position or the drainage position, and the elastic reset member 33 may drive the transmission rod 321 to idle to be reset to the initial position.

The intermediate critical position between the sealing position and the drainage position refers to the intermediate critical position between the sealing position and the drainage position in a movement stroke of the valve core 31, that is, the valve core 31 passes through the intermediate critical position in a process of the valve core 31 moving from the sealing position to the drainage position, and also passes through the intermediate critical position in a process of the valve core 31 moving from the drainage position to the sealing position.

When the first end of the transmission rod 321 directly or indirectly drives the valve core 31 to cross the intermediate critical position, the elastic positioning member may drive the valve core 31 to continue to move to the sealing position or the drainage position. Specifically, when the valve core 31 moves from the sealing position to the drainage position and crosses the intermediate critical position, the elastic positioning member may drive the valve core 31 to continue to move to the drainage position, that is, after the valve core 31 crosses the intermediate critical position, even though the transmission rod 321 stops driving the valve core 31, the valve core 31 may continue to move to the drainage position under an action of the elastic positioning member. When the valve core 31 moves from the drainage position to the sealing position and crosses the intermediate critical position, the elastic positioning member may drive the valve core 31 to continue to move to the sealing position, that is, after the valve core 31 crosses the intermediate critical position, even though the transmission rod 321 stops driving the valve core 31, the valve core 31 may continue to move to the sealing position under an action of the elastic positioning member.

The elastic positioning member may drive the valve core 31 to continue to move to the sealing position or the drainage position, therefore, as long as the transmission rod 321 drives the valve core 31 to cross the intermediate critical position, even when the driving device 2 stops driving the first shifting rod 322, the transmission rod 321 and the first shifting rod 322 may idle to be reset under an action of the first torsion spring 33. In this way, when the driving device 2 needs to toggle the first shifting rod 322 next time, the driving device 2 will toggle the first shifting rod 322 at the same position, which may simplify driving and fitting structures of the transmission rod mechanism 32 and the driving device 2.

It should be noted that the transmission rod mechanism 32 may drive the valve core 31 to rotate, or may drive the valve core 31 to translate.

Specific structural forms of the transmission rod mechanism 32 are not limited. Exemplarily, in some embodiments, with reference to FIG. 3 and FIG. 13, the transmission rod mechanism 32 includes a reversal mechanism 323 connected between the valve core 31 and the first end of the transmission rod 321, and the transmission rod mechanism 32 drives the valve core 31 to translate through the reversal mechanism 323, and the reversal mechanism 323 is configured to convert rotation of the transmission rod 321 into translation of the valve core 31.

In the embodiment, a movement mode of the valve core 31 is translation, so that a side of the valve core 31 used to close the drainage hole 11a always faces the drainage hole 11a, and when the valve core 31 is switched from the drainage position to the sealing position, the side of the valve core 31 used to close the drainage hole 11a may stably, reliably, directly or indirectly press against the periphery of the drainage hole 11a, so that sealing reliability of the drainage hole 11a may be greatly improved, and sealing effect thereof is good.

In an embodiment, with reference to FIG. 4 and FIG. 16, the valve core 31 is provided with a sliding groove 31a, and with reference to FIG. 8 and FIG. 15, the reversal mechanism 323 includes a turntable 3231 and a protruding column 3232. The protruding column 3232 protrudes from a side of the turntable 3231, is eccentrically arranged relative to the rotation center line L, extends into the sliding groove 31a and may rotate in the sliding groove 31a. The reversal mechanism 323 is equivalent to a cam transmission mechanism, and when the reversal mechanism 323 rotates around the rotation center line L, the protruding column 3232 may drive the valve core 31 to translate.

With reference to FIG. 8 and FIG. 15, the turntable 3231 is provided with a first driving groove 3231a, the first driving groove 3231a has first driving surfaces 3231b on opposite sides along a rotation direction respectively, the first end of the transmission rod 321 is at least partially positioned in the first driving groove 3231a and may slide in the first driving groove 3231a, and the first end of the transmission rod 321 may be alternatively driving-fitted with one of the first driving surfaces 3231b to drive the reversal mechanism 323 to rotate around the rotation center line L.

It should be noted that a rotation direction of the transmission rod mechanism 32 is related to a rotation direction of the inner tub 11. For example, when the inner tub 11 rotates in a clockwise direction of FIG. 21, in case that the driving device 2 toggles the first shifting rod 322, the first shifting rod 322 only drives the transmission rod mechanism 32 to rotate around the rotation center line L in a counterclockwise direction of FIG. 21. When the inner tub 11 rotates in the counterclockwise direction of FIG. 21, in case that the driving device 2 toggles the first shifting rod 322, the first shifting rod 322 only drives the transmission rod mechanism 32 to rotate around the rotation center line L in the clockwise direction of FIG. 21.

During washing of the laundry treatment device, the valve core 31 is positioned at the sealing position. Then, with reference to FIG. 9, a part of the first end of the transmission rod 321 is in contact with one of the first driving surfaces 3231b, and at this time, the inner tub 11 continues to rotate in the same direction. In case that the first shifting rod 322 is toggled due to misoperation of the driving device 2, then the first shifting rod 322 may drive the transmission rod mechanism 32 to rotate in a clockwise direction of FIG. 9, and the first end of the transmission rod 321 idles in the first driving groove 3231a, that is, the first shifting rod 322 and the transmission rod 321 generate an idle stroke. At this time, the transmission rod mechanism 32 does not drive the valve core 31 to move, and the valve core 31 may be still kept at the current sealing position, so that reliability of the laundry treatment device may be improved. When the inner tub 11 rotates reversely, the first end of the transmission rod 321 biases the first driving surface 3231b after the driving device 2 toggles the first shifting rod 322, so that the reversal mechanism 323 is forced to rotate in a counterclockwise direction of FIG. 9. When the reversal mechanism 323 rotates to a position shown in FIG. 10, the valve core 31 has crossed the intermediate critical position, and thereafter, in case that the driving device 2 no longer applies an acting force to the first shifting rod 322, the transmission rod 321 rotates backward in a clockwise direction of FIG. 10, the reversal mechanism 323 continues to rotate in a counterclockwise direction shown in FIG. 10 until the reversal mechanism 323 moves to a state shown in FIG. 11, in which the valve core 31 is successfully switched from the sealing position to the drainage position, the transmission rod 321 also returns to the initial position, and at this time, the first end of the transmission rod 321 is in contact with the other of the first driving surfaces 3231b.

With reference to FIG. 11, when the valve core 31 is positioned at the drainage position and the inner tub 11 does not change its rotation direction, in case that the first shifting rod 322 is toggled due to misoperation of the driving device 2, then the first shifting rod 322 may drive the transmission rod mechanism 32 to rotate in a counterclockwise direction of FIG. 11, and the first end of the transmission rod 321 idles in the first driving groove 3231a, that is, the first shifting rod 322 and the transmission rod 321 generate an idle stroke, the transmission rod mechanism 32 does not drive the valve core 31 to move, the valve core 31 may be still kept at the current drainage position, and after idling, the transmission rod 321 still returns to the initial position under an action of the first torsion spring 33, so that reliability of the laundry treatment device may be improved. When the inner tub 11 rotates reversely, the first end of the transmission rod 321 biases the other of the first driving surfaces 3231b after the driving device 2 toggles the first shifting rod 322, so that the reversal mechanism 323 is forced to rotate so as to drive the valve core 31 to translate, and drive the valve core 31 to switch from the drainage position to the sealing position.

Specific connection structures of the turntable 3231 and the transmission rod 321 are not limited.

Exemplarily, in an embodiment, with reference to FIG. 8, the turntable 3231 is formed with a through hole 3231c, an inner wall of the through hole 3231c is provided with two rotationally symmetrical protrusions 32311 which divide a part of space of the through hole 3231c to form two first driving grooves 3231a distributed in a circumferential direction, the first end of the transmission rod 321 is provided with a flat shaft portion 3211 positioned on the rotation center line L. With reference to FIG. 9 to FIG. 11, opposite ends of the flat shaft portion 3211 in a radial direction of the through hole 3231c extend into their respective first driving grooves 3231a respectively. In this way, on one hand, torque transmission of the turntable 3231 and the transmission rod 321 may be more stable, and on the other hand, two reaction forces applied by the turntable 3231 to the flat shaft portion 3211 may be balanced with respect to each other, thereby avoiding or reducing a shear force borne by the transmission rod 321 and improving stressing conditions of the transmission rod 321.

In another embodiment, with reference to FIG. 15, a through hole 3231c is formed in the turntable 3231, and the first driving groove 3231a penetrates through a part of side wall corresponding to the through hole 3231c in a radial direction of the through hole 3231c, that is, the first driving groove 3231a is generally notch-shaped. With reference to FIG. 12 and FIG. 13, a bump 3212 is arranged on a surface of the transmission rod 321, the transmission rod 321 is arranged in the through hole 3231c and passes through the through hole 3231c, and the bump 3212 is positioned in the first driving groove 3231a. In the embodiment, torque transmission is implemented by driving cooperation of the bump 3212 and two first driving surfaces 3231b of the first driving groove 3231a. It should be noted that specific shapes of the bump 3212 are not limited.

Specific structural forms of the elastic positioning member are not limited.

Exemplarily, in an embodiment, with reference to FIG. 2, FIG. 3, FIG. 12 and FIG. 13, the elastic positioning member is a second torsion spring 34. With reference to FIG. 2, the second torsion spring 34 includes a spiral body 341, a first rotation arm 342 and a second rotation arm 343, position of the first rotation arm 342 is fixed relative to the inner tub 11, that is, the first rotation arm 342 does not move relative to the inner tub 11; the spiral body 341 is suspended, and the second rotation arm 343 may move along with the valve core 31 or the transmission rod mechanism 32. During movement of the second rotation arm 343 along with the valve core 31 or the transmission rod mechanism 32, the second rotation arm 343 drives the spiral body 341 to move therewith. When the second rotation arm 343 are positioned at different positions, direction of an acting force applied by the second rotation arm 343 to the valve core 31 directly or indirectly also changes, so that the second torsion spring 34 may drive the valve core 31 to translate in a direction within a certain stroke range, and drive the valve core 31 to translate in a reverse direction within another stroke range.

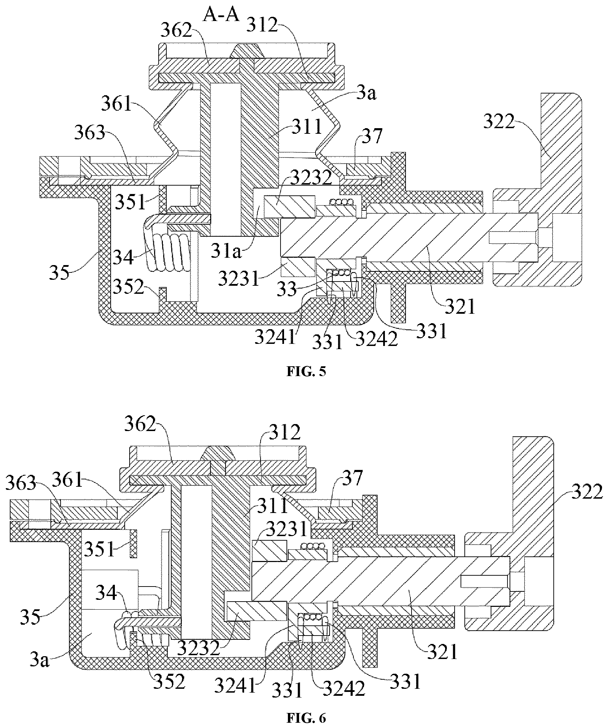

In an embodiment, with reference to FIG. 2 to FIG. 6, the second rotation arm 343 is connected to the valve core 31. With reference to FIG. 5, when the valve core 31 is positioned at the sealing position, position of the second rotation arm 343 is positioned on a side of the first rotation arm 342 close to the drainage hole 11a. An acting force applied by the second torsion spring 34 to the valve core 31 has at least a force component parallel to a movement direction of the valve core 31 and facing toward the drainage hole 11a. Specifically, the acting force applied by the second torsion spring 34 to the valve core 31 has an upward force component in FIG. 5, and this force component abuts the valve core 31 around the drainage hole 11a.

With reference to FIG. 6, when the valve core 31 is positioned at the drainage position, position of the second rotation arm 343 is positioned on a side of the first rotation arm 342 away from the drainage hole 11a. An acting force applied by the second torsion spring 34 to the valve core 31 has at least a force component parallel to the movement direction of the valve core 31 and away from the drainage hole 11a. Specifically, the acting force applied by the second torsion spring 34 to the valve core 31 has a downward force component in FIG. 6, and this force component keeps the valve core 31 at the drainage position relatively stably.

When the valve core 31 is positioned at the intermediate critical position, an acting force applied by the second torsion spring 34 to the valve core 31 has a direction perpendicular to the movement direction of the valve core 31. Specifically, the acting force applied by the second torsion spring 34 to the valve core 31 is perpendicular to direction of a paper surface of FIG. 5 or FIG. 6, that is, at this time, the second torsion spring 34 does not drive the valve core 31 to move upward, and does not drive the valve core 31 to move downward.

It should be noted that the intermediate critical position is only a transition position, and the valve core 31 is not required to be kept at this position.

In another embodiment, with reference to FIG. 12 to FIG. 16, the second rotation arm 343 is connected to the reversal mechanism 323. With reference to FIG. 16, when the valve core 31 is positioned at the sealing position, the second torsion spring 34 applies a first torque around the rotation center line L to the reversal mechanism 323, and the reversal mechanism 323 abuts the valve core 31 around the drainage hole 11a under an action of the first torque, and specifically, direction of the first torque is a clockwise direction of FIG. 16. When the valve core 31 is positioned at the drainage position, the second torsion spring 34 applies a second torque around the rotation center line L to the reversal mechanism 323, and the reversal mechanism 323 keeps the valve core 31 at the drainage position under an action of the second torque, and the first torque has a direction opposite to the second torque. When the valve core 31 is positioned at the intermediate critical position, a torque applied by the second torsion spring 34 to the reversal mechanism 323 is zero.

In an embodiment, with reference to FIG. 3, FIG. 4 and FIG. 14, one of the valve seat 35 or the valve core 31 is provided with a guide groove 35b, the other of the valve seat 35 or the valve core 31 is provided with a guide rib 3110, and the guide rib 3110 is sliding-fitted with the guide groove 35b. In this way, translation reliability of the valve core 31 may be improved, and the valve core 31 is prevented from biasing.

In an embodiment, with reference to FIG. 2, FIG. 3, FIG. 5, FIG. 6, FIG. 12 and FIG. 13, the drainage valve assembly 3 includes a flexible sealing member 36 sleeved on the opened side of the valve seat 35, the flexible sealing member 36 and the valve seat 35 enclose together to form a sealing cavity 3a, and the valve core 31, the elastic positioning member, the first torsion spring 33 and the reversal mechanism 323 are positioned in the sealing cavity 3a, and the valve core 31 is connected to the flexible sealing member 36 to drive the flexible sealing member 36 to move.

The valve core 31, the reversal mechanism 323, the first torsion spring 33, the elastic positioning member, or the like may not in contact with washing water, since all of them are arranged in the sealing cavity 3a. On one hand, hairs and scraps in the washing water may not enter the sealing cavity 3a, therefore, hairs, scraps and other impurities are prevented from blocking or winding on the transmission rod mechanism 32 and the valve core 31, normal movement of the valve core 31 may be guaranteed, working reliability and service life of the drainage valve assembly are improved. On the other hand, when the transmission rod mechanism 32 or the valve core 31 is made of a metal material, corrosion effect of the washing water on the metal material may also be prevented.

Specific structural forms of the flexible sealing member 36 are not limited.

With reference to FIG. 2 and FIG. 16, the valve core 31 includes a valve plate 312 and a valve column 311 which are fixedly connected, the flexible sealing member 36 includes a telescopic pipe 361, a supporting end plate 362 and a flange 363. The supporting end plate 362 and the flange 363 are positioned at opposite ends of the telescopic pipe 361, the flange 363 is arranged at an axial end of the telescopic pipe 361 and connected to the opened side of the valve seat 35, the supporting end plate 362 closes the other end of the telescopic pipe 361, the valve plate 312 is stacked on an inner surface of the supporting end plate 362, and when the valve core 31 is positioned at the sealing position, the valve plate 312 abuts the supporting end plate 362 around the drainage hole 11a.

It should be noted that the flexible sealing member 36 may be an integrally formed structure to improve structural reliability of the flexible sealing member 36. Material of the flexible sealing member 36 is not limited, for example, includes but is not limited to: silica gel, rubber, or the like.

On one hand, the flexible sealing member 36 needs to reliably seal the drainage hole 11a when it is positioned at the sealing position, and may reliably elude the drainage hole 11a when it is positioned at the drainage position, to avoid a great movement acting force on the valve core 31, and improve movement reliability of the valve core 31. To this end, in an embodiment of the application, the telescopic pipe 361 is a corrugated tube, to be adapted to movement of the valve core 31 by stretching or folding of the corrugated tube itself, and does not have great elastic deformation resistance itself.

In some other embodiments, the transmission rod 321 drives the valve core 31 to rotate. Specifically, the valve core 31 is provided with a second driving groove including second driving surfaces on opposite sides along a rotation direction respectively, a first end of the transmission rod 321 is positioned in the second driving groove and slidable in the second driving groove, the transmission rod 321 may be alternatively driving-fitted with one of the second driving surfaces to drive the valve core 31 to rotate, the first shifting rod 322 is connected to a second end of the transmission rod 321, and the driving device 2 selectively toggles the first shifting rod 322. In the embodiment, structures of the transmission rod 321 and the second shifting rod 22 may be the same as structures in any one of the above embodiments. The structure of the second driving groove may also be the same as the structure of the first driving groove 3231a in any one of the above embodiments. The principle of the first end of the transmission rod 321 fitting with the second driving groove may refer to the principle of the transmission rod 321 fitting and the first driving groove 3231a, which are not elaborated here.

The drainage valve assembly 3 according to the embodiments of the invention may be arranged at any suitable position of the inner tub 11.

In an embodiment, with reference to FIG. 18 to FIG. 20, the laundry treatment device includes a lifting rib 14 in which the valve core 31 and the elastic reset member are arranged, the first end of the transmission rod 321 is positioned in the lifting rib 14, the second end of the transmission rod 321 extends outside an axial end of the inner tub 11, and the first shifting rod 322 is positioned outside the axial end of the inner tub 11. It should be noted that in the embodiment of the drainage valve assembly 3 including the valve seat 35, the valve seat 35 is also arranged in the lifting rib 14, and the valve seat 35 is fixedly connected to the lifting rib 14.

In a process of the laundry treatment device washing laundries, the laundries are carried by the lifting rib 14 to rotate together with the lifting rib 14, and after the laundries are lifted to a certain height, the laundries fall into water again under an action of gravity of the laundries themselves, so that rod beating and falling effects are generated, achieving washing effect. On one hand, the lifting rib 14 protects the drainage valve assembly 3 and prevents the laundries from winding on the drainage valve assembly 3. On the other hand, existing structures of the laundry treatment device are fully utilized, space inside the lifting rib 14 is fully utilized, and capacity of the inner tub 11 used to wash laundries is not reduced.

Specific arrangement positions of the driving device 2 are not limited, as long as the driving device 2 may provide a mounting position, so that the driving device 2 does not rotate along with the inner tub 11.

In an embodiment, with reference to FIG. 17 to FIG. 20, the driving device 2 is arranged on the outer tub 12, the first shifting rod 322 is positioned between the inner tub 11 and the outer tub 12. The driving device 2 includes a second shifting rod 22 and a power unit 21 driving the second shifting rod 22 to selectively extend towards the shifting rod or retract, and in an extending state of the second shifting rod 22, the second shifting rod 22 may selectively toggle the first shifting rod 322 to rotate forward or backward around the rotation center line L.

Movement forms of the second shifting rod 22 are not limited, and may be linear movement or rotation.

Specific structures of the power unit 21 are not limited. For example, in an embodiment, the power unit 21 may be a linear motor driving the second shifting rod 22 to extend or retract along a length direction of the second shifting rod 22. In another embodiment, the power unit 21 may be a rotation motor with a rotation shaft fixedly connected to the second shifting rod 22, and the rotation motor drives the second shifting rod 22 to rotate forward or backward, so as to extend or retract the second shifting rod 22.

The drainage valve assembly 3 according to a plurality of specific embodiments of the invention is described below with reference to the drawings.

### First embodiment

With reference to FIG. 1 to FIG. 8, in the embodiment, the transmission rod mechanism 32 drives the valve core 31 assembly to translate.

The drainage valve assembly 3 includes the transmission rod mechanism 32, the valve seat 35, the valve core 31, the flexible sealing member 36, the reversal mechanism 323, the first torsion spring 33 and the second torsion spring 34 as described above.

The first torsion spring 33 is sleeved on the transmission rod 321. A first end of the transmission rod 321 is provided with a flat shaft portion 3211, and a second end of the transmission rod 321 is sleeved on the first shifting rod 322 so that synchronous rotation may be implemented.

The turntable 3231 is formed with a through hole 3231c, two rotationally symmetrical protrusions 32311 are arranged on an inner wall of the through hole 3231c and divide a part of space of the through hole 3231c to form two first driving grooves 3231a distributed in a circumferential direction, and opposite ends of the flat shaft portion 3211 along a radial direction of the through hole 3231c extend into their respective first driving grooves 3231a respectively.

The turntable 3231 is connected to a transverse side of the valve column 311, and the second rotation arm 343 of the second torsion spring 34 is connected to the other side of the valve column 311.

The first rotation arm 342 of the second torsion spring 34 is connected to the valve seat 35, and specifically, the valve seat 35 is provided with a first insertion hole, and the first rotation arm 342 is inserted into the first insertion hole and may rotate in the first insertion hole. The second rotation arm 343 of the second torsion spring 34 is connected to the valve column 311, and specifically, with reference to FIG. 2, a side of the valve column 311 is provided with a second insertion hole 31b, and the second rotation arm 343 is inserted into the second insertion hole 31b and may rotate in the second insertion hole 31b.

In order to limit movement amplitude of the second torsion spring 34, in an embodiment, with reference to FIG. 5 and FIG. 6, the valve seat 35 is provided with a first blocking rib 351 and a second blocking rib 352, and the second rotation arm 343 may move within a range defined by the first blocking rib 351 and the second blocking rib 352. Specifically, with reference to FIG. 5, when the valve core 31 is positioned at the sealing position, the second rotation arm 343 is in blocking-contact with the first blocking rib 351. With reference to FIG. 6, when the valve core 31 is positioned at the drainage position, the second rotation arm 343 is in blocking-contact with the second blocking rib 352. The first blocking rib 351 and the second blocking rib 352 may limit and block movement of the second rotation arm 343 to prevent excessive movement of the second rotation arm 343.

With reference to FIG. 4, guide ribs 3110 are arranged on opposite sides of the valve core 31 along the rotation center line L respectively and extend along the movement direction of the valve core 31, two guide grooves 35b arranged at an interval are arranged in the valve seat 35, the guide ribs 3110 extend into the guide grooves 35b in a sliding manner respectively, and specifically, the valve core 31 is sandwiched between the two guide grooves 35b.

### Second embodiment

With reference to FIG. 12 to FIG. 16, most of the structures according to the embodiment of the invention are substantially the same as those of the first embodiment, and differences there-between comprise structure of the second end of the transmission rod 321, structure of the reversal mechanism 323, and connection position of the second torsion spring 34.

Specifically, the turntable 3231 is formed with a through hole 3231c, and the first driving groove 3231a penetrates through a part of side wall corresponding to the through hole 3231c along a radial direction of the through hole 3231c, that is, the first driving groove 3231a is generally notch-shaped. A surface of the transmission rod 321 is provided with a bump 3212, the transmission rod 321 is arranged in the through hole 3231c and passes through the through hole 3231c, and the bump 3212 is positioned in the first driving groove 3231a.

The second torsion spring 34 and the reversal mechanism 323 are arranged on the same side of the valve core 31, and the second rotation arm 343 of the second torsion spring 34 is connected to the reversal mechanism 323. Specifically, with reference to FIG. 15, the reversal mechanism 323 is provided with a third insertion hole 3231d, and the second rotation arm 343 extends into the third insertion hole 3231d and may rotate in the third insertion hole 3231d.

The drainage principle of the laundry treatment device is described below.

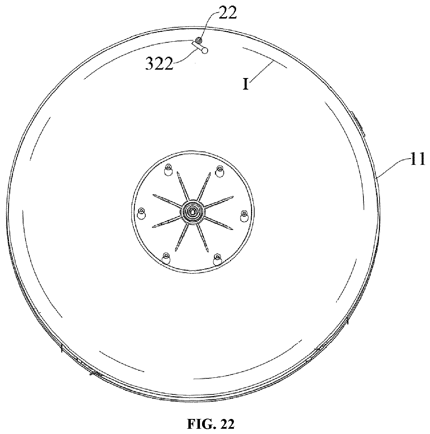

With reference to FIG. 21, it is assumed that the inner tub 11 rotates in the clockwise direction of FIG. 21, the second shifting rod 22 extends towards the drainage valve assembly 3, there is relative movement between the second shifting rod 22 and the inner tub 11, and a trajectory of the second shifting rod 22 relative to the inner tub 11 is a circle I. The second shifting rod 22 is in contact with the first shifting rod 322 from a right side of the first shifting rod 322, and since the first shifting rod 322 continues to rotate along with the inner tub 11, with reference to FIG. 22, the second shifting rod 22 forces the first shifting rod 322 to rotate counterclockwise, and the first shifting rod 322 drives the transmission rod 321 to rotate counterclockwise synchronously, so as to drive the valve core 31 to move. After the first shifting rod 322 is disengaged from the second shifting rod 22, the first shifting rod 322 rotates clockwise under an action of the first torsion spring 33 to be reset to the position shown in FIG. 21. Since position of the valve core 31 has been switched, then the shifting rod is retracted, or the inner tub 11 rotates several circles and then the shifting rod is retracted.

Even though the second shifting rod 22 is not retracted, when the inner tub 11 rotates for a next circle, the second shifting rod 22 toggles the first shifting rod 322 again, and the first shifting rod 322 and the transmission rod 321 may idle without changing the position of the valve core 31. That is, in case that the position of the valve core 31 has been successfully switched, even though the second shifting rod 22 is not retracted, the second shifting rod 22 does not jam the first shifting rod 322, and thus, in subsequent rotation, the second shifting rod 22 does not affect rotation of the inner tub 11, and the second shifting rod 22 does not hold the inner tub 11 and does not mistakenly trigger change of the position of the valve core 31.

When the inner tub 11 rotates reversely, i.e., in the counterclockwise direction of FIG. 21, the second shifting rod 22 extends toward the drainage valve assembly 3, the second shifting rod 22 is in contact with the first shifting rod 322 from a left side of the first shifting rod 322 and forces the first shifting rod 322 to rotate clockwise, and the first shifting rod 322 drives the transmission rod 321 to rotate clockwise synchronously, so as to drive the valve core 31 to move. When the first shifting rod 322 is disengaged from the second shifting rod 22, the first shifting rod 322 rotates counterclockwise under an action of the first torsion spring 33 to be reset. Since the position of the valve core 31 has been switched, then the shifting rod is retracted, or the inner tub 11 rotates several circles and then the shifting rod is retracted.

It should be noted that as long as a rotation angle of the first shifting rod 322 enables the valve core 31 to bypass the above intermediate critical position, after the valve core 31 crosses the critical position, the valve core 31 may continue to rotate under an action of the elastic positioning member, until the valve core 31 moves to the drainage position.

Various embodiments/implementations provided in the invention may be combined with each other without contradiction, the scope of the invention being defined by the appended claims.

## Claims

1. A drainage valve assembly (3), comprising: a valve core (31), configured to seal a drainage hole, and having a drainage position and a sealing position; a transmission rod mechanism (32), having a rotation center line, and comprising a transmission rod (321) and a first shifting rod (322) connected to each other, a first end of the transmission rod (321) directly or indirectly driving the valve core (31) to move so that the valve core (31) is switched between the sealing position and the drainage position, and a second end of the transmission rod (321) connected to the first shifting rod (322); and an elastic reset member, configured to drive the transmission rod (321) and the first shifting rod (322) to be reset to their respective initial positions;
further comprising a valve seat (35) of which a side is opened, at least a part of the valve core (31) arranged in the valve seat (35), and the first shifting rod (322) positioned outside the valve seat (35);
**characterized in that**: the elastic reset member is a first torsion spring (33) sleeved on the transmission rod (321), two rotation arms (331) of the first torsion spring (33) abutted against the valve seat (35) in a separable way, and in a process of the transmission rod (321) driving the valve core (31) to rotate or translate, the transmission rod mechanism (32) is operative to alternatively toggle one of the rotation arms (331) to move therewith.

2. The drainage valve assembly (3) of claim 1, wherein at the initial position, the transmission rod (321) is operative to rotate forward or backward, a pre-tightening force is formed between each of the two rotation arms (331) and the valve seat (35), and the first torsion spring (33) is operative to be kept at the initial position under an action of pre-tightening forces corresponding to the two rotation arms (331).

3. The drainage valve assembly (3) of claim 1, wherein any one of the rotation arms (331) moves toward a direction of tightening the first torsion spring (33) by toggling of the transmission rod mechanism (32).

4. The drainage valve assembly (3) of claim 1, wherein the transmission rod mechanism (32) comprises a toggling rod (3242) moving synchronously with the transmission rod (321) and positioned between the two rotation arms (331) to alternatively toggle any one of the rotation arms (331).

5. The drainage valve assembly (3) of claim 4, wherein a bottom surface of the valve seat (35) is provided with a convex rib (353) extending along a length direction of the transmission rod (321), and when the transmission rod (321) is positioned at the initial position: in a plane projection perpendicular to the rotation center line, the two rotation arms (331) are intersected and then abutted against opposite sides of the convex rib (353), and the toggling rod (3242) is positioned between an intersection point of the two rotation arms (331) and the convex rib (353).

6. The drainage valve assembly (3) of claim 4, wherein the transmission rod mechanism (32) comprises a sleeving member (324) comprising a sleeve portion (3241) and the toggling rod (3242), the sleeve portion (3241) is sleeved on the transmission rod (321) and synchronously rotates along with the transmission rod (321), and the toggling rod (3242) is connected to the sleeve portion (3241).

7. The drainage valve assembly (3) of claim 6, wherein a circumferential surface of the sleeve portion (3241) is provided with a boss (3241a), the toggling rod (3242) extends along an axial direction of the sleeve portion (3241), and an end of the toggling rod (3242) is connected to the boss (3241a).

8. The drainage valve assembly (3) of claim 1, wherein one of the valve seat (35) or the valve core (31) is provided with a guide groove (35b), the other of the valve seat (35) or the valve core (31) is provided with a guide rib (3110), and the guide rib (3110) is sliding-fitted with the guide groove (35b).

9. The drainage valve assembly (3) of claim 1, comprising an elastic positioning member, the valve core (31) operative to be kept at the sealing position or the drainage position under an action of the elastic positioning member, and the elastic reset member operative to drive the transmission rod (321) to idle to be reset to the initial position, optionally, wherein the valve core (31) has an intermediate critical position between the sealing position and the drainage position, and when the transmission rod (321) drives the valve core (31) to cross the intermediate critical position, the elastic positioning member is operative to drive the valve core (31) to continue to move to the sealing position or the drainage position., and the elastic reset member is operative to drive the transmission rod (321) to idle to be reset.

10. The drainage valve assembly (3) of claim 1, wherein the transmission rod mechanism (32) further comprises a reversal mechanism (323) connected between the valve core (31) and the first end of the transmission rod (321), and the transmission rod mechanism (32) drives the valve core (31) to translate through the reversal mechanism (323).

11. A laundry treatment device, comprising: an inner tub (11), configured to hold water, and be provided with a drainage hole (11a); a driving device (20); and the drainage valve assembly (3) of any one of claims 1 to 10, connected to the inner tub (11), and the driving device (20) toggling the first shifting rod (322) to drive the transmission rod mechanism (32) to rotate around the rotation center line.

12. The laundry treatment device of claim 11, comprising a lifting rib (14) in which the valve core (31) and the elastic reset member are arranged, the first end of the transmission rod (321) positioned in the lifting rib (14), the second end of the transmission rod (321) extending outside an axial end of the inner tub (11), and the first shifting rod (322) positioned outside the axial end of the inner tub (11).

13. The laundry treatment device of claim 11, comprising an outer tub (12) in which the inner tub (11) is rotatably arranged, the driving device (20) arranged on the outer tub (12), the first shifting rod (322) positioned between the inner tub (11) and the outer tub (12), the driving device (20) comprising a second shifting rod (22) and a power unit driving the second shifting rod (22) to selectively extend towards the shifting rod or retract, and in an extending state of the second shifting rod (22), the second shifting rod (22) operative to selectively toggle the first shifting rod (322) to rotate forward or backward around the rotation center line.

## Patentansprüche

1. Entleerungsventil-Baugruppe (3), umfassend: einen Ventilkern (31), der dafür gestaltet ist, eine Entleerungsöffnung abzudichten, und der eine Entleerungsposition und eine Dichtungsposition aufweist, einen Transmissionsstangenmechanismus (32), der eine Rotationsmittellinie aufweist und eine Transmissionsstange (321) und eine erste Verschiebungsstange (322) umfasst, die miteinander verbunden sind, wobei ein erstes Ende der Transmissionsstange (321) direkt oder indirekt den Ventilkern (31) antreibt, sich derart zu bewegen, dass der Ventilkern (31) zwischen der Dichtungsposition und der Entleerungsposition umgeschaltet wird, und ein zweites Ende der Transmissionsstange (321) mit der ersten Verschiebungsstange (322) verbunden ist, und ein elastisches Rückstellelement, das dafür gestaltet ist, die Transmissionsstange (321) und die erste Verschiebungsstange (322) anzutreiben, in ihre jeweilige Ausgangsposition zurückzukehren,
ferner umfassend einen Ventilsitz (35), dessen eine Seite offen ist, wobei mindestens ein Teil des Ventilkerns (31) in dem Ventilsitz (35) angeordnet ist und die erste Verschiebungsstange (322) außerhalb des Ventilsitzes (35) positioniert ist,
**dadurch gekennzeichnet, dass** das elastische Rückstellelement eine erste Torsionsfeder (33) ist, die auf die Transmissionsstange (321) aufgesetzt ist, wobei zwei Rotationsarme (331) der ersten Torsionsfeder (33) in einer separaten Weise an dem Ventilsitz (35) anliegen und der Transmissionsstangenmechanismus (32) in einem Prozess des Antreibens des Ventilkerns (31) durch die Transmissionsstange (321), sich zu drehen oder zu verschieben, funktionsfähig ist, abwechselnd einen der Rotationsarme (331) umzustellen, sich dabei mitzubewegen.

2. Entleerungsventil-Baugruppe (3) nach Anspruch 1, wobei die Transmissionsstange (321) in der Ausgangsposition funktionsfähig ist, sich vorwärts oder rückwärts zu drehen, zwischen jedem der zwei Rotationsarme (331) und dem Ventilsitz (35) eine Voranzugskraft gebildet ist und die erste Torsionsfeder (33) funktionsfähig ist, unter der Wirkung der Voranzugskräfte entsprechend den zwei Rotationsarmen (331) in der Ausgangsposition gehalten zu werden.

3. Entleerungsventil-Baugruppe (3) nach Anspruch 1, wobei sich durch Umstellen des Transmissionsstangenmechanismus (32) einer der Rotationsarme (331) in einer Richtung bewegt, in der die erste Torsionsfeder (33) angezogen wird.

4. Entleerungsventil-Baugruppe (3) nach Anspruch 1, wobei der Transmissionsstangenmechanismus (32) eine Umstellstange (3242) umfasst, die sich synchron mit der Transmissionsstange (321) bewegt und zwischen den zwei Rotationsarmen (331) positioniert ist, um abwechselnd einen der Rotationsarme (331) umzustellen.

5. Entleerungsventil-Baugruppe (3) nach Anspruch 4, wobei eine Unterseite des Ventilsitzes (35) mit einer konvexen Rippe (353) versehen ist, die sich entlang einer Längenrichtung der Transmissionsstange (321) erstreckt, und wenn die Transmissionsstange (321) in der Ausgangsposition positioniert ist, sich die zwei Rotationsarme (331) in einer Ebenenprojektion senkrecht zu der Rotationsmittellinie kreuzen und dann an gegenüberliegenden Seite der konvexen Rippe (353) anliegen und die Umstellstange (3242) zwischen einem Kreuzungspunkt der zwei Rotationsarme (331) und der konvexen Rippe (353) positioniert ist.

6. Entleerungsventil-Baugruppe (3) nach Anspruch 4, wobei der Transmissionsstangenmechanismus (32) ein Aufsetzelement (324) umfasst, das einen Aufsetzabschnitt (3241) und die Umstellstange (3242) umfasst, wobei der Aufsetzabschnitt (3241) auf die Transmissionsstange (321) aufgesetzt ist und sich synchron zusammen mit der Transmissionsstange (321) dreht und die Umstellstange (3242) mit dem Aufsetzabschnitt (3241) verbunden ist.

7. Entleerungsventil-Baugruppe (3) nach Anspruch 6, wobei eine Umfangsfläche des Aufsetzabschnitts (3241) mit einer Nase (3241a) versehen ist, sich die Umstellstange (3242) entlang einer axialen Richtung des Aufsetzabschnitts (3241) erstreckt und ein Ende der Umstellstange (3242) mit der Nase (3241a) verbunden ist.

8. Entleerungsventil-Baugruppe (3) nach Anspruch 1, wobei der Ventilsitz (35) oder der Ventilkern (31) mit einer Führungsrille (35b) versehen ist, der entsprechende andere des Ventilsitzes (35) und des Ventilkerns (31) mit einer Führungsrippe (3110) versehen ist und die Führungsrippe (3110) gleitfähig in die Führungsrille (35b) eingepasst ist.

9. Entleerungsventil-Baugruppe (3) nach Anspruch 1, umfassend ein elastisches Positionierungselement, wobei der Ventilkern (31) funktionsfähig ist, unter einer Wirkung des elastischen Positionierungselements in der Dichtungsposition oder der Entleerungsposition gehalten zu werden, und das elastische Rückstellelement funktionsfähig ist, die Transmissionsstange (321) in den Leerlauf anzutreiben, um in die Ausgangsposition zurückgestellt zu werden, wobei der Ventilkern (31) optional zwischen der Dichtungsposition und der Entleerungsposition eine kritische Zwischenposition aufweist, und wenn die Transmissionsstange (321) den Ventilkern (31) antreibt, die kritische Zwischenposition zu überschreiten, das elastische Positionierungselement funktionsfähig ist, den Ventilkern (31) anzutreiben, die Bewegung in die Dichtungsposition oder in die Entleerungsposition fortzusetzen, und das elastische Rückstellelement funktionsfähig ist, die Transmissionsstange (321) in den Leerlauf anzutreiben, um zurückgestellt zu werden.

10. Entleerungsventil-Baugruppe (3) nach Anspruch 1, wobei der Transmissionsstangenmechanismus (32) ferner einen Umkehrmechanismus (323) umfasst, der zwischen dem Ventilkern (31) und dem ersten Ende der Transmissionsstange (321) eingebunden ist, und der Transmissionsstangenmechanismus (32) den Ventilkern (31) antreibt, sich durch den Umkehrmechanismus (323) zu verschieben.

11. Wäschebehandlungsvorrichtung, umfassend: einen inneren Bottich (11), der dafür gestaltet ist, Wasser zu halten und mit einer Entleerungsöffnung (11a) versehen zu sein, eine Antriebsvorrichtung (20) und die Entleerungsventil-Baugruppe (3) nach einem der Ansprüche 1 bis 10, die mit dem inneren Bottich (11) verbunden ist, und die Antriebsvorrichtung (20) die erste Verschiebungsstange (322) umstellt, um den Transmissionsstangenmechanismus (32) anzutreiben, sich um die Rotationsmittellinie zu drehen.

12. Wäschebehandlungsvorrichtung nach Anspruch 11, umfassend eine Hubrippe (14), in der der Ventilkern (31) und das elastische Rückstellelement angeordnet sind, wobei das erste Ende der Transmissionsstange (321) in der Hubrippe (14) positioniert ist, sich das zweite Ende der Transmissionsstange (321) außerhalb eines axialen Endes des inneren Bottichs (11) erstreckt und die erste Verschiebungsstange (322) außerhalb des axialen Endes des inneren Bottichs (11) positioniert ist.

13. Wäschebehandlungsvorrichtung nach Anspruch 11, umfassend einen äußeren Bottich (12), in dem der innere Bottich (11) drehbar angeordnet ist, wobei die Antriebsvorrichtung (20) an dem äußeren Bottich (12) angeordnet ist, die Verschiebungsstange (322) zwischen dem inneren Bottich (11) und dem äußeren Bottich (12) positioniert ist, die Antriebsvorrichtung (20) eine zweite Verschiebungsstange (22) und eine Energieeinheit umfasst, welche die zweite Verschiebungsstange (22) antreibt, wahlweise zu der Verschiebungsstange auszufahren oder einzufahren und die zweite Verschiebungsstange (22) in einem ausgefahrenen Zustand der zweiten Verschiebungsstange (22) funktionsfähig ist, die erste Verschiebungsstange (322) wahlweise umzustellen, sich vorwärts oder rückwärts um die Rotationsmittellinie zu drehen.

## Revendications

1. Ensemble formant robinet de vidange (3), comportant : un noyau de robinet (31), configuré pour sceller un trou de vidange, et ayant une position de vidange et une position de fermeture étanche ; un mécanisme de tige de transmission (32), ayant une ligne centrale de rotation, et comportant une tige de transmission (321) et une première tige de déplacement (322) reliées l'une à l'autre, une première extrémité de la tige de transmission (321) entraînant directement ou indirectement le noyau de robinet (31) à des fins de mouvement de telle sorte que le noyau de robinet (31) est commuté entre la position de fermeture étanche et la position de vidange, et une deuxième extrémité de la tige de transmission (321) reliée à la première tige de déplacement (322) ; et un élément de réinitialisation élastique, configuré pour entraîner la tige de transmission (321) et la première tige de déplacement (322) à être réinitialisées sur leurs positions initiales respectives ;
comportant par ailleurs un siège de robinet (35) dont un côté est ouvert, au moins une partie du noyau de robinet (31) étant agencée dans le siège de robinet (35), et la première tige de déplacement (322) étant positionnée à l'extérieur du siège de robinet (35) ;
**caractérisé en ce que** : l'élément de réinitialisation élastique est un premier ressort de torsion (33) emmanché sur la tige de transmission (321), deux bras de rotation (331) du premier ressort de torsion (33) venant buter contre le siège de robinet (35) de manière séparable, et lors d'un processus comme quoi la tige de transmission (321) entraîne le noyau de robinet (31) à des fins de rotation ou de translation, le mécanisme de tige de transmission (32) fonctionne de manière à faire basculer tour à tour l'un des bras de rotation (331) afin qu'il se déplace avec lui.

2. Ensemble formant robinet de vidange (3) selon la revendication 1, dans lequel, sur la position initiale, la tige de transmission (321) fonctionne pour tourner vers l'avant ou vers l'arrière, une force de pré-serrage est formée entre chacun des deux bras de rotation (331) et le siège de robinet (35), et le premier ressort de torsion (33) fonctionne pour être maintenu sur la position initiale sous l'action de forces de pré-serrage correspondant aux deux bras de rotation (331).

3. Ensemble formant robinet de vidange (3) selon la revendication 1, dans lequel l'un quelconque des bras de rotation (331) se déplace vers une direction de serrage du premier ressort de torsion (33) par basculement du mécanisme de tige de transmission (32).

4. Ensemble formant robinet de vidange (3) selon la revendication 1, dans lequel le mécanisme de tige de transmission (32) comporte une tige basculante (3242) se déplaçant de manière synchrone avec la tige de transmission (321) et positionnée entre les deux bras de rotation (331) pour faire basculer tour à tour l'un quelconque des bras de rotation (331).

5. Ensemble formant robinet de vidange (3) selon la revendication 4, dans lequel une surface inférieure du siège de robinet (35) est dotée d'une nervure convexe (353) s'étendant le long d'une direction allant dans le sens de la longueur de la tige de transmission (321), et quand la tige de transmission (321) est positionnée sur la position initiale : dans une projection sur plan perpendiculaire à la ligne centrale de rotation, les deux bras de rotation (331) se croisent puis sont mis en butée contre les côtés opposés de la nervure convexe (353), et la tige basculante (3242) est positionnée entre un point d'intersection des deux bras de rotation (331) et la nervure convexe (353).

6. Ensemble formant robinet de vidange (3) selon la revendication 4, dans lequel le mécanisme de tige de transmission (32) comporte un élément de manchon (324) comportant une partie de manchon (3241) et la tige basculante (3242), la partie de manchon (3241) est emmanchée sur la tige de transmission (321) et tourne de manière synchrone avec la tige de transmission (321), et la tige basculante (3242) est reliée à la partie de manchon (3241).

7. Ensemble formant robinet de vidange (3) selon la revendication 6, dans lequel une surface circonférentielle de la partie de manchon (3241) est dotée d'un bossage (3241a), la tige basculante (3242) s'étend le long d'une direction axiale de la partie de manchon (3241), et une extrémité de la tige basculante (3242) est reliée au bossage (3241a).

8. Ensemble formant robinet de vidange (3) selon la revendication 1, dans lequel l'un parmi le siège de robinet (35) ou le noyau de robinet (31) est doté d'une rainure de guidage (35b), l'autre parmi le siège de robinet (35) ou le noyau de robinet (31) est doté d'une nervure de guidage (3110), et la nervure de guidage (3110) est adaptée par ajustement coulissant par rapport à la rainure de guidage (35b).

9. Ensemble formant robinet de vidange (3) selon la revendication 1, comportant un élément de positionnement élastique, le noyau de robinet (31) fonctionnant de manière à être maintenu sur la position de fermeture étanche ou sur la position de vidange sous l'action de l'élément de positionnement élastique, et l'élément de réinitialisation élastique fonctionnant pour entraîner la tige de transmission (321) au ralenti pour être réinitialisée sur la position initiale, éventuellement, dans lequel le noyau de robinet (31) a une position critique intermédiaire entre la position de fermeture étanche et la position de vidange, et quand la tige de transmission (321) entraîne le noyau de robinet (31) à traverser la position critique intermédiaire, l'élément de positionnement élastique fonctionne pour entraîner le noyau de robinet (31) à continuer à se déplacer jusque sur la position de fermeture étanche ou la position de vidange, et l'élément de réinitialisation élastique fonctionne pour entraîner la tige de transmission (321) au ralenti pour être réinitialisée.

10. Ensemble formant robinet de vidange (3) selon la revendication 1, dans lequel le mécanisme de tige de transmission (32) comporte par ailleurs un mécanisme d'inversion (323) relié entre le noyau de robinet (31) et la première extrémité de la tige de transmission (321), et le mécanisme de tige de transmission (32) entraîne le noyau de robinet (31) à des fins de translation au travers du mécanisme d'inversion (323).

11. Dispositif de traitement de linge, comportant : une cuve intérieure (11), configurée pour contenir de l'eau, et dotée d'un trou de vidange (11a) ; un dispositif d'entraînement (20) ; et l'ensemble formant robinet de vidange (3) selon l'une quelconque des revendications 1 à 10, relié à la cuve intérieure (11), et le dispositif d'entraînement (20) faisant basculer la première tige de déplacement (322) pour entraîner le mécanisme de tige de transmission (32) à tourner autour de la ligne centrale de rotation.

12. Dispositif de traitement de linge selon la revendication 11, comportant une nervure de levage (14) dans laquelle le noyau de robinet (31) et l'élément de réinitialisation élastique sont agencés, la première extrémité de la tige de transmission (321) étant positionnée dans la nervure de levage (14), la deuxième extrémité de la tige de transmission (321) s'étendant à l'extérieur d'une extrémité axiale de la cuve intérieure (11), et la première tige de déplacement (322) étant positionnée à l'extérieur de l'extrémité axiale de la cuve intérieure (11).

13. Dispositif de traitement de linge selon la revendication 11, comportant une cuve extérieure (12) dans laquelle la cuve intérieure (11) est agencée de manière rotative, le dispositif d'entraînement (20) étant agencé sur la cuve extérieure (12), la première tige de déplacement (322) étant positionnée entre la cuve intérieure (11) et la cuve extérieure (12), le dispositif d'entraînement (20) comportant une deuxième tige de déplacement (22) et un bloc d'alimentation entraînant la deuxième tige de déplacement (22) à s'étendre de manière sélective vers la tige de déplacement ou à se rétracter, et dans un état d'extension de la deuxième tige de déplacement (22), la deuxième tige de déplacement (22) fonctionnant pour faire basculer de manière sélective la première tige de déplacement (322) à des fins de rotation vers l'avant ou vers l'arrière autour de la ligne centrale de rotation.
